# EUROPÄISCHE PATENTSCHRIFT

(11) **EP 0 824 624 B1**
(45) Veröffentlichungstag und Bekanntmachung des Hinweises auf die Patenterteilung: **20.10.1999**
(21) Anmeldenummer: 96907459.0
(22) Anmeldetag: 14.03.1996
(51) Int. Cl.: E05B 13/10, E05B 1/00

(54) **SICHERHEITSEINRICHTUNG FÜR DEN VERSCHLUSS EINER SCHALTSCHRANKTÜR, EINER MASCHINENVERKLEIDUNG ODER DGL.**
SECURITY DEVICE FOR THE LOCK ON A SWITCHGEAR-CABINET DOOR, MACHINE HOUSING, ETC
DISPOSITIF DE SECURITE POUR LA FERMETURE D'UNE PORTE D'UNE ARMOIRE DE COMMANDE, D'UN HABILLAGE DE MACHINE OU ANALOGUE

(30) Priorität: 09.05.1995 DE 29507654 U
(43) Veröffentlichungstag der Anmeldung: 25.02.1998
(73) Patentinhaber: Ramsauer, Dieter, D-42555 Velbert (DE)
(72) Erfinder: Ramsauer, Dieter, D-42555 Velbert (DE)
(74) Vertreter: Stratmann, Ernst, Dr.-Ing.
(86) Internationale Anmeldenummer: EP9601079
(87) Internationale Veröffentlichungsnummer: WO9635851

(56) Entgegenhaltungen:
- EP-A- 0 261 266
- EP-A- 0 635 612
- WO-A-85/03971
- DE-C- 4 302 835
- GB-A- 2 279 401

## Beschreibung

### TECHNISCHES GEBIET

Die Erfindung betrifft einen eine Sicherheitseinrichtung umfassenden Schwenkhebelverschluß für das Türblatt eines Schaltschranks, die Klappe eines Gehäuses, die Wandverkleidung eines Gehäuserahmens.

### STAND DER TECHNIK

Dem Anmelder ist bereits eine innerbetrieblich benutzte Sicherungseinrichtung für eine Schaltschranktür bekannt, bei der unabhängig vom eigentlichen Türverschluß ein Drehriegel in eine solche Stellung gebracht werden kann, daß ein Öffnen der Tür verhindert wird. Diese Verriegelungsstellung des zusätzlichen Drehriegels kann durch eine zusätzliche Sicherungseinrichtung elektronisch festgehalten werden, so daß die Entriegelung nur unter bestimmten Situationen möglich ist, beispielsweise wenn das Schrankinnere spannungsfrei geschaltet ist.

Dem Anmelder ist eine weitere innerbetrieblich benutzte, nur für kleine Türen vorgesehene Version bekannt, bei der ein hebelförmiger Verschluß mit seinem einen Hebelarm die Tür in der geschlossenen Stellung zu verriegeln in der Lage ist, während der gegenüberliegende Arm von einer elektrischen Einrichtung in der Verriegelungsstellung festgehalten wird, wenn das Schrankinnere unter Spannung steht.

Abgesehen von diesen nur dem Anmelder bekannten Ausführungsformen ist aus einem Katalog der Firma K.A. Schmersal GmbH & Co. KG, Wuppertal, Seite 33, ein Sicherheitsschalter allgemein bekannt, der an Schutzgittern, Hauben und Türen verwendet wird, die geschlossen sein müssen, um die erforderliche Betriebssicherheit zu erreichen. Beim Schließen der Schutzeinrichtung durch Einschieben des Betätigungsschlüssels in einen der von dem Sicherheitsschalter gebildeten Schlitze werden Sicherheitskontakte geschlossen. Beim Öffnen der Schutzeinrichtung wird durch Herausziehen des Betätigungsschlüssels der Sicherheitskontakt mechanisch zwangsläufig geöffnet und der Schließerkontakt geschlossen. Nachteilig bei diesem Stand der Technik ist, daß dieser Sicherheitsschalter zusätzlich zu Verschlußeinrichtungen für beispielsweise die Tür vorgesehen werden muß, was die Anordnung aufwendig macht.

Aufgabe der Erfindung ist es, eine Sicherheitseinrichtung der eingangs genannten Art dahingehend zu schaffen, daß für die Türverriegelung und für die Sicherung weniger, vorzugsweise nicht mehr als zwei unterschiedliche Elemente notwendig sind.

Eine weitere Aufgabe besteht darin, die Sicherheitseinrichtung so auszugestalten, daß zusätzliche Verschlußeinrichtungen vorgesehen werden können, die nur durch befugte Personen geöffnet werden können.

Desweiteren soll die Sicherungseinrichtung so gestaltet sein, daß nicht die Gefahr des unbeabsichtigten Herausreißens und damit ggf. Öffnens des Verschlusses besteht, was beispielsweise zu einer Gefährdung der Person führen würde, die möglicherweise unbeabsichtigt den Türverschluß öffnet und so in das Innere eines noch unter Spannung stehenden Schaltschrankes gelangen könnte.

Insbesondere soll für die Türverriegelung und für die Sicherung ein einziger Verschluß ausreichend sein, wänrend bisher Sicherung und Verriegelung der Tür, der Klappe, der Wandverkleidung od. dgl. unabhängig voneinander erfolgt sind.

Desweiteren soll der sicherbare Verschluß derartig kräftig ausgeführt werden können, daß auch große Türen sicher zugehalten werden. Desweiteren soll die Anordnung derart getroffen werden, daß die eigentlichen Zuhaltekräfte für die Tür nicht von der Sicherungseinrichtung aufgebracht werden, sondern durch die Verschlußeinrichtung.

Gelöst wird der obige Aufgabenkomplex durch die Merkmale des Anspruchs 1.

Auf diese Weise gelingt es, mit nur einem Verschlußelement sowohl die Türverriegelung zu erreichen, wie auch die Sicherungsfunktion, die bei bestimmten Anwendungsfällen zusätzlich erforderlich ist.

Die Sicherungseinrichtung behindert nicht die Bewegung der Tür selbst, so daß keine Gefahr des unbeabsichtigten Herausreißens oder Beschädigens der Sicherungseinrichtung beim Versuch der Türöffnung besteht, desweiteren sind nunmehr erfindungsgemäß die Verriegelungs- und Sicherungseinrichtung in einer Konstruktion vereinigt, was sowohl eine Vereinfachung der Montage wie auch eine größere Sicherheit beider Funktionen ergibt.

Die erfindungsgemäße Sicherheitseinrichtung ermöglicht zahlreiche unterschiedliche Ausführungsformen. So kann das am Griff des Schwenkhebelverschlusses befestigte Teil ein Dauermagnet, das am Türrahmen od. dgl. befestigte Teil ein Magnetschalter sein, der bei geschlossener Tür und eingeklappten Griff so durch das Magnetfeld des Dauermagneten beeinflußt und geschaltet wird, daß ein Stromkreis geöffnet oder geschlossen wird, wodurch dann die Inbetriebsetzung erfolgen kann, beispielsweise der von der Tür abgetrennte Schaltschrankinnenbereich unter Strom gesetzt werden kann oder die in dem Maschinengehäuse befindliche Maschine in Betrieb gesetzt werden kann. Wird dann der Schwenkhebelgriff aus seiner Ruhelage bzw. Verschlußlage, beispielsweise aus in einer Mulde eingeklappten Stellung herausgeschwenkt, um beispielsweise den Verschluß und anschließend die Tür zu öffnen, gelangt der von dem Dauermagneten nun nicht mehr beeinflußte Magnetschalter in eine andere Stellung, die beispielsweise die in dem Maschinenraum angeordnete Maschine zum Stillstand bringt oder die in einem Schaltschrank untergebrachte Schaltung erdet und damit den Zutritt für eine Bedienungsperson ungefährlich macht.

Gemäß einer Weiterbildung der Erfindung weist das am Griff befestigte Teil einen Ansatz auf, der in dem anderen Teil mechanisch verriegelbar ist.

Gemäß einer anderen Ausführungsform ist beispielsweise das eine, am Schwenkhebel befestigte Teil mit einem Schlüsselprofil versehen, das in eine ein entsprechendes Profil aufweisende Aufnahmeöffnung im anderen, am Türrahmen od. dgl. befestigten Teil passend aufnehmbar ist. Bei Eindringen dieses speziell geformten, schlüsselprofilaufweisenden Teils in das andere Teil wird wiederum ein Schalter umgeschaltet, ähnlich wie bei der vorstehend geschilderte Ausführungsform mit Magnetschalter, durch den die gleichen Funktionen ausgelöst werden können, wie sie oben geschildert worden sind. Der Vorteil dieser Ausführungsform ist der, daß die Manipulation für nicht autorisiertes Personal erschwert wird, da hier ein besonderes schlüsselartiges Teil vorgesehen sein muß, das beispielsweise auch bei geöffneter Tür durch Einstecken in das am Türrahmen befestigte Teil die Sicherungsfunktion außer Kraft setzt, was bei der erstgenannten Ausführungsform durch einen entsprechenden leichter beschaffbaren Magneten auch für Unbefugte leichter möglich wäre. Eine derartige Außerkraftsetzung der Sicherungsfunktion kann für Wartungszwecke vorgesehen sein, jedoch ist es günstig, wenn für besonders autorisierte Personen mit entsprechend besonderen, das Schlüsselprofil aufweisenden Werkzeugen diese Außerkraftsetzung der Sicherungsfunktion ermöglicht würde.

Gestaltet man den Schlüsselbart derartig, daß er von Zuhaltungen des anderen Teils umgriffen wird, kann zum einen die Gesamtzahl der sichernden Merkmale (Zuhaltungsfunktionen) vergrößert und damit der Sicherheitsfaktor erhöht werden, zum anderen kann die Schaltung so vorgenommen werden, daß die beiden Teile ineinander festgehalten werden, und zwar so lange, wie noch innerhalb des Schrankes beispielsweise eine Maschine läuft oder Spannung vorhanden ist. Diese Haltefunktion gegenüber dem Versuch, den Schwenkhebel aus seiner eingeschwenkten Position herauszuschwenken, kann dadurch noch vergrößert werden, daß das eine Teil mit zumindest einer Öffnung oder Durchbruch versehen ist, in die zumindest ein vom anderen Teil ausgehender Querstift oder Nase eindringen kann. Diese Öffnung kann auch ein unregelmäßiges Profil aufweisen, in das das andere Teil schlüsselartig einpaßbar ist. Auch hier kombiniert sich die Funktion des gegen große Kraft festhaltenden mechanischen Sicherungseffektes mit der Sicherung gegen Manipulationen dadurch, daß nur mit ganz bestimmten schlüsselartig passenden Teilen die Sicherungsfunktion außer Kraft gesetzt werden kann.

Insbesondere kann das eine Teil eine ggf. Querprofilierung aufweisendes Flachmetallstück mit Einschnitten und/oder Durchbrüchen darstellen, das an der Unterseite des Griffhebels fern von dessen Schwenkachse angeordnet ist. Das andere Teil, beispielsweise ein Sicherungsschalter, weist dann einen Aufnahmeschlitz für das Flachmetallstück auf, wobei beispielsweise mittels eines Steuersignals bewegliche, den Schlitz quer ein- oder durchdringende Stifte oder Nasen vorgesehen sein können, die ggf. das in den Schlitz eingeführte Flachmetallstück bei eingeklapptem Schwenkhebel in dieser Stellung festhalten, bis z. B. die Maschine innerhalb eines Maschinenkastens zum Stillstand gekommen ist oder die in einem Schaltschrank befindlichen Anlagenteile spannungslos gemacht worden sind, woraufhin ein entsprechendes Steuersignal die Stifte zurückzieht und damit das Flachmetallstück freigibt und damit wiederum ermöglicht, den Schwenkhebel herauszuklappen und den Verschluß der Tür zu öffnen und damit die Tür aufzumachen.

Das zweite, vorzugsweise einen Sicherungsschalter darstellende Teil wird an einem bezüglich des Rahmens festen Punkt derart angeordnet, daß bei verschlossener Tür und in die Mulde eingeklapptem Griff dieses zweite Teil sowohl durch das Türblatt hindurch wie auch ggf. in die Mulde hinein bis zu dem einqeschwenkten Schwenkhebel reicht, so daß von dem Sicherungsschalter ausgehende Stifte durch den Durchbruch in dem Flachmetallstück hindurchtreten und diesen dadurch festhalten können.

Ein besonders günstiger Anwendungsfall ist ein Stangenverschluß, der durch einen Schwenkhebel betätigbar ist, in welchem Falle ein Stangenvorsprung oder auch eine Verkröpfungsfläche an einer der Stangen vorgesehen sein kann, die beim Versuch, den Stangenverschluß zu öffnen, gegen die Arretierungsfläche oder Arretierungsstift einer Magnetsperre oder eines Schaltertasters anfährt, wenn sich diese Magnetsperre in ihrer Sicherungsstellung befindet, beispielsweise ausgelöst durch noch laufende Maschine oder noch unter Spannung befindlichem Schaltschrank. Diese Sperre könnte aufgehoben werden, wenn beispielsweise die Maschine zum Stillstand gekommen ist oder durch einen Hauptschalter die Innereien eines Schaltschrankes spannungslos gemacht worden sind, woraufhin dann ein entsprechendes Signal zum Magnetschalter gelangt und diesen veranlaßt, die Fläche oder den Stangenvorsprung freizugeben, so daß nunmehr der Stangenverschluß derart betätigt werden kann, daß die Tür geöffnet werden kann.

Zusätzlich zu den geschilderten elektrischen Sicherungseinrichtungen kann der Schwenkhebel noch eine z. B. mechanische, durch einen Schlüssel betätigbare Verriegelung aufweisen, die beispielsweise bezüglich der elektrischen Sicherung axial versetzt auf dem Schwenkhebelgriff angeordnet sein mag.

Als besonders günstig hat sich eine Ausführungsform erwiesen, bei deren Anwendung das zweite Teil, das z. B. die Form eines flachen Kastens aufweist, auf die zum Schrankinneren weisende Fläche einer Blechschranktürrahmenabkantung aufgeschraubt ist, mit einem durch einen Durchbruch in dieser Fläche und durch einen weiteren, dazu fluchtenden Durchbruch im Türblatt (wenn dieses sich in der geschlossenen Stellung befindet) ragenden Vorsprung, der dann bis zum Schwenkhebel in der bereits geschilderten Weise reicht, um dort das erste Teil aufzunehmen, das vom Schwenkgriff ausgeht.

### KURZE BESCHREIBUNG DER ERFINDUNG

Die Erfindung wird nachfolgend anhand von Ausführungsbeispielen näher erläutert, die in den Zeichnungen dargestellt sind.

Es zeigt:
- Fig. 1: in einer axialen Schnittansicht einen Stangenverschluß mit Schwenkhebelbetätigung und zusätzlicher Sicherungseinrichtung gemäß einer ersten Ausführungsform der Erfindung;
- Fig. 2: eine Querschnittansicht durch die Anordnung gemäß Fig. 1;
- Fig. 3: eine Ansicht von hinten auf die Anordnung gemäß Fig. 1;
- Fig. 4: eine Ansicht von vorne auf die Anordnung gemäß Fig. 1;
- Fig. 5: eine Ansicht ähnlich der Fig. 1, wobei die Tür in geöffneter, angelehnter Stellung, jedoch mit eingeklapptem Schwenkhebel dargestellt ist;
- Fig. 6: in einer ähnlichen Ansicht wie Fig. 1 eine andere Ausführungsform der Erfindung;
- Fig. 7: eine Querschnittansicht auf die Anordnung gemäß Fig. 6 und
- Fig. 8: eine Ansicht von hinten ähnlich wie in der Anordnung gemäß Fig. 6.

### BESTE WEGE DER AUSFÜHRUNG DER ERFINDUNG

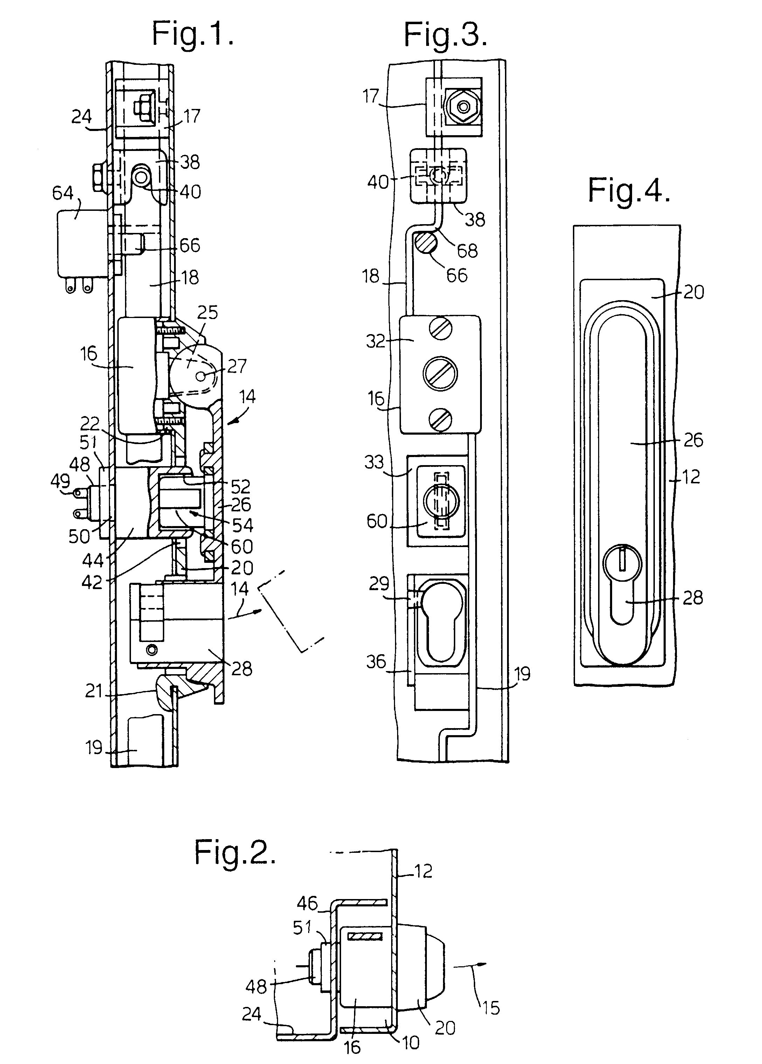

In Fig. 1 ist in einer Längsschnittansicht ein Schwenkhebelstangenverschluß 14 zu erkennen, der im Verkantungsraum 10 (siehe Fig. 2, eine Querschnittsansicht) angeordnet ist, der zwischen dem abgekanteten Türblatt 12 und dem abgekanteten Öffnungsbereich eines Blechschrankkorpus 24 gebildet ist. Der Schwenkhebelstangenverschluß umfaßt bei der dargestellten Anordnung ein Schloß 16, von dem im Verkantungsraum 10 verlaufende Stangen 18, 19 ausgehen, die zum einen innerhalb des Schlosses 16, zum anderen aber auch am Türblatt 12 befestigten Stangenführungen 17 verschieblich gelagert sind.

Das Türblatt 12 ist am Schrankkorpus 24 derart angelenkt, daß es in Richtung des in Fig. 2 dargestellten Pfeiles 15 von dem dort dargestellten Rahmenbereich 24 weggeschwenkt werden kann.

Eine Grundplatte oder Aufnahmemulde 20 reicht mit von dieser ausgehenden Ansätzen 21 bzw. 22 durch Türblattdurchbrüche 36 bzw. 32 hindurch, wobei die Platte oder Aufnahmemulde 20 beispielsweise mittels eines Hakens (bei 21) oder einer aufgeschraubten Abdeckkappe (bei 22) im Türblatt festgehalten wird.

Mittels einer hier nicht näher interessierenden Ritzelanordnung innerhalb des Schloßkastens 16 werden die Verriegelungsstangen 18, 19 in axialer Richtung verschoben, wenn eine mit dem Ritzel verbundene Betätigungsachse 25 durch den Betätigungshebel 26 verdreht wird. Der Betätigungshebel 26 ist an der Betätigungsachse 25 mittels einer Schwenkachse 27 angelenkt, während das freie Ende des Betätigungshebels 26 ein Zylinderschloß 28 trägt, das beim Einschwenken des Hebels 26 in die Mulde 20 in eine von dieser Mulde gebildete Öffnung derart eindringen kann, daß der Zylinderschloßdaumen 29 hinter eine von der Mulde 20 gebildete Anschlagfläche gleiten kann und so den Hebel 26 in seiner eingeschwenkten Stellung zu verriegeln ermöglicht. Wie aus der Fig. 1 weiter zu erkennen ist, ist am Schrankkorpus 24 ein hakenartiger Vorsprung 38 angeschraubt, in den bei Schließen des Stangenverschlusses ein von der Verschlußstange 18 getragener Doppelrollzapfen 40 eindringt und so eine Verriegelung bildet, die ein Öffnen der Tür in der dargestellten Stellung von Doppelrollzapfen und Haken verhindert. Der U-förmige Haken 38 nimmt zwischen seinen Schenkeln die Stange 18 auf und ist mit seinem Stegbereich mittels einer Schraube am Schrankkorpus festgeschraubt, wie aus den Fig. 1 und 3 deutlich wird. Die Stangenführung 17 ihrerseits ist mittels einer Stehbolzenanordnung am Türblatt 12 befestigt, so daß durch die Verriegelungsstange 18 das Türblatt 12 bezüglich des Türrahmens 24 festgehalten wird und somit nicht in Richtung des Pfeiles 15 gemäß Fig. 2 aufgeschwenkt werden kann. Erst wenn der Schwenkhebel 26 aus seiner in Fig. 1 dargestellten Stellung in Richtung des Pfeiles 41 um die Achse 27 so weit herausgeschwenkt wird, daß er um die Achse der Betätigungsachse 25 gedreht werden kann, kann durch diesen Drehvorgang der Achse 25 über das nicht dargestellte Ritzel die Verschlußstange 18 (und entsprechend auch die Verschlußstange 19) jeweils in Richtung auf den Schloßkasten 16 hin axial um ein solches Maß verschoben werden, daß der Doppelrollzapfen 40 (oder ein sonstiger Verriegelungszapfen) aus dem Bereich des Hakens 38 freikommt und damit das Türblatt 12 in Richtung des Pfeiles 15 verschwenkt und die Tür somit geöffnet werden kann.

Durch den weiteren Durchbruch 33 im Türblatt 12, der sich in einen entsprechenden Durchbruch 42 in der Aufnahmemulde 20 fortsetzt, reicht ein elektronisches Sicherungsteil 44 hindurch, das hier auf dem abgekanteten, parallel zum Türblatt 12 liegenden Teil 46 (siehe Fig. 2) montiert ist, bei der in Fig. 1 und 2 dargestellten Ausführungsform dadurch, daß von dem auf der äußeren Fläche des abgekanteten Teils 46 aufgesetzten Teil des elektrischen Sicherheitsteils 44 ein mit Gewinde versehener Ansatz 48 durch eine Öffnung 50 in der Abkantung 46 hindurchreicht und mittels einer aufgeschraubten Überwurfmutter 51 montiert ist.

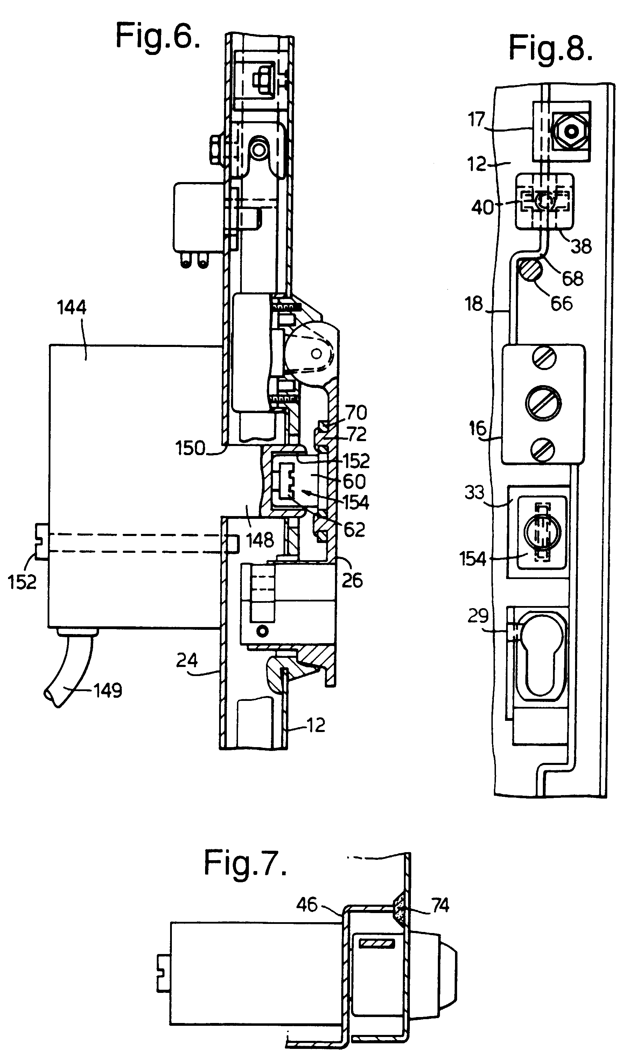

Bei der Ausführungsform gemäß Fig. 6 ist das dort dargestellte elektrische Sicherungsteil 144 dagegen von der anderen Seite des Abkantungsteils 46 aufgesetzt und reicht mit einem Ansatz 148 durch eine Öffnung 150 und ist mit einer Schraubbolzenanordnung 152 am Türrahmen 24 befestigt.

Das elektrische Sicherungsteil 44 bzw. 144 weist elektrische Kontaktanschlüsse 49 und entsprechende Anschlußkabel 149 auf, über das elektrische Signale oder elektrische Betriebsenergie zugeführt bzw. weggeleitet werden können.

Das Sicherungsteil 44 bzw. 144 weist an seinem dem Schwenkhebel 26 zugewandten Teil einen Aufnahmebereich wie Schlitz oder Einsenkung 52 bzw. 152 auf, in das ein vom Schwenkhebel 26 getragener weiterer Sicherungsteil 54 bzw. 154 reicht, wenn die Tür geschlossen ist und der Schwenkhebel 26 sich in seiner eingeschwenkten Stellung befindet, wie in den Fig. 1 bzw. 6 dargestellt.

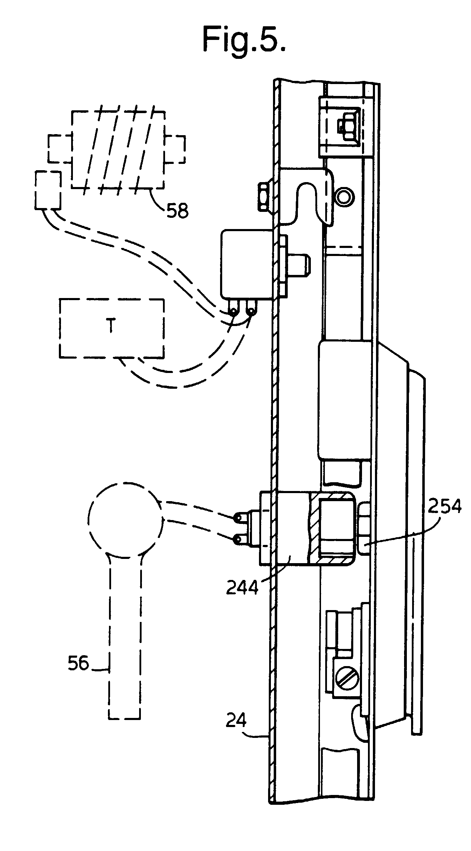

Bei der in Fig. 1 erkennbaren Ausführungsform kann das am Schwenkhebel 26 befestigte Sicherungsteil 54 ein Dauermagnet sein, während das am Türrahmen 24 befestigte andere Sicherungsteil 44 ein Magnetschalter darstellen könnte, der durch den Dauermagneten beispielsweise eingeschaltet wird, wenn sich die beiden Teile in der in Fig. 1 dargestellten Stellung zueinander befinden, d. h. in einer Stellung, bei der die Tür ganz geschlossen ist und der Schwenkhebel sich in seiner eingeschwenkten Stellung befindet. Dieser durch den Dauermagneten erzeugte Einschaltvorgang für den Magnetschalter könnte dazu verwendet werden, ein elektrisches Signal zu erzeugen und einer Steuerungseinrichtung zuzuleiten, die wiederum es ermöglichen würde, den in dem zugehörigen Schaltschrank befindlichen Anlagenteil in Betrieb zu setzen. Wenn umgekehrt der Schwenkhebel aus seiner dargestellten Stellung herausgeschwenkt ist, oder wenn das Türblatt sich nicht in der vollständig geschlossenen Stellung befindet, siehe beispielsweise Fig. 5, liegt der zweite Sicherungsteil 254, beispielsweise der Dauermagnet, nicht innerhalb des ersten, am Türrahmen befestigten ersten Sicherungsteils 244 und dieses Sicherungsteil 244 erzeugt ein Signal oder unterbricht ein Signal, derart, daß das Schrankinnere z. B. spannungslos wird oder nicht unter Spannung gesetzt werden kann, oder, falls es sich um eine Maschinenverkleidung handelt, verhindert, daß diese Maschine in Betrieb gesetzt oder in Betrieb gehalten wird. Das bedeutet, daß eine nicht korrekt geschlossene Tür trotz eingeschwenktem Griffhebel verhindert, daß beispielsweise ein Hauptschalter 56 geschlossen werden kann.

Die Sicherungsfunktion kann noch erweitert werden: Um beispielsweise zu verhindern, daß bei noch laufender Maschine 58, siehe Fig. 5, die z. B. Messerwalzen aufweist, der Schwenkhebel ausgeschwenkt werden kann, um die Tür zu öffnen, könnte beispielsweise durch einen ständig fließenden elektrischen Strom ein Magnetfeld erzeugt werden, das den Dauermagneten des Teils 254 (oder auch ein Weicheisenteil) so stark anzieht, daß ein Herausschwenken des Schwenkhebels bei noch laufender Maschine verhindert zumindest aber stark erschwert wird.

Eine noch größere Sicherungswirkung in dieser Hinsicht erreicht man beispielsweise dadurch, daß statt eines Dauermagneten 254 gemäß Fig. 6 der am Griff befindliche Sicherungsteil 154 einen Ansatz 60 bzw. 160 aufweist, der bei Aufnahme in dem anderen Teil 44 bzw. 144 in diesem mechanisch verriegelbar ist. Dieser Verriegelungsvorgang kann wiederum elektronisch ausgelöst sein.

Um Manipulationen derart zu verhindern, daß durch Einstecken eines nicht dafür vorgesehenen Gegenstandes in das Sicherungsteil 44 bzw. 144 es zur Einschaltung beispielsweise derartig zu schützenden Maschinenanordnung kommt, kann die erfinderungsgemäße Anordnung noch dahingehend weitergebildet werden, daß das eine, vorzugsweise das am Griff befindliche Sicherungsteil 60 bzw. 160 ein Schlüsselprofil aufweist, wie es beispielsweise in Fig. 3 zu erkennen ist, wobei das Teil in eine entsprechende Profilierung aufweisende Aufnahmeöffnung 52 des anderen, vorzugsweise am Türrahmen befestigten Teils passend aufnehmbar ist, was bedeutet, daß nur ein entsprechendes Profil aufweisendes Werkzeug bzw. Vorsprung die Entriegelung bzw. Inbetriebsetzung der zu schützenden Anlage ermöglicht.

Die Sicherungsfunktion kann auch dadurch erhöht werden, daß der Ansatz nicht nur eine Profilierung aufweist, bzw. ohne Profilierung ist, sondern auch zusätzlich oder stattdessen eine Schlüsselbartanordnung umfaßt, in die Zuhaltungen des anderen Teils eingreifen können. So weist das in Fig. 6 dargestellte Sicherungsteil 154 nicht nur eine Querschnitts-Profilierung auf, siehe beispielsweise die Fig. 8, sondern dieses hier als Flachmetallstück konzipierte Bauteil besitzt auch noch einen irregulär profilierten Durchbruch 62, in die von dem Ansatz 148 in die Öffnung 152 des anderen Sicherungsteils 144 vorspringende Stifte, Nasen od. dgl. derart eindringen können, daß zum einen das Sicherungsteil 154 in der eingeschobenen Stellung auch unverrückbar festgehalten wird, zum anderen feststellbar ist, daß tatsächlich sich das richtige Sicherungsteil mit dem richtigen irregulär profilierten Durchbruch 62 und dem entsprechenden Querschnittsprofil innerhalb der Öffnung 152 befindet, in welchem alleinigen Fall über das Kabel 149 beispielsweise eine Signalisierung weggeführt wird, die die Maschine oder die Schaltanlage, die durch das Türblatt geschützt werden soll, in Betrieb setzt, oder die Inbetriebsetzung ermöglicht.

Eine weitere Schutzanordnung ist gemäß Fig. 1 durch eine Magnetsperre 64 zu verwirklichen: Solange die Maschine 58 läuft, und solange ein Zeitglied T nach Abschalten der Maschine noch nicht ausgelöst hat, befindet sich ein von der Magnetsperre 64 vorspringender Blockierstift 66 im Wege einer Verkröpfungsfläche 68 der Verriegelungsstange 18: Erst wenn die Maschine zum Stillstand gekommen ist oder der Zeitschalter nach Ablauf der für das Stillstehen notwendigen Zeit ausgelöst hat, wird der Magnetsperre 64 ein Signal zugeführt, das dieses Sperrorgan veranlaßt, den Stift 66 so weit zurückzuziehen, daß die Verkröpfungsfläche 68 an ihm vorbeilaufen kann, so daß erst jetzt möglich ist, die Verriegelungsstange 18 in die Richtung des Schlosses 16 zu verschieben und damit die Verriegelung der Tür aufzuheben und diese Tür dann zu öffnen. Dieser Stift 66 kann auch so angeordnet sein, daß er z. B. in den Schloßkasten 16 hineinreicht und dort die Ritzelbewegung sperrt.

Die Befestigung des Sicherungsteils 54 bzw. 154 am Schwenkhebel kann vorzugsweise durch eine Grundplatte 70 erfolgen, die beispielsweise in das Innere des muldenförmig ausgestalteten Griffhebels 26 angeklebt ist oder bereits beim Spritzgießen dieses Griffhebels durch Butzen 72 des Griffhebelmaterials festgelegt wird, das durch geeignete Öffnungen in der Grundplatte während des Spritzgießvorganges hindurchdringt und dadurch die Platte am Griffhebel festlegt.

Wie aus Fig. 7 hervorgeht, verschließt das Sicherungsteil 144 - ggf. unter Zwischenlage einiger Dichtungsblätter - die in der Fläche 146 vorgesehene Durchburchöffnung 150, so daß ein gasdichter Abschluß zwischen dem Inneren des Schrankes od. dgl. und dem Äußeren des Schrankes erhalten bleibt, der durch einen Dichtungsstreifen 74 bewirkt worden ist, so daß die neue Anordnung die gasdichte Abdichtung eines Schaltschrankes nicht beeinträchtigt.

Die erfindungsgemäße Einrichtung ermöglicht somit mit Hilfe eines abgewandelten Schwenkhebelverschlusses an sich üblicher Bauart, nicht nur eine Sicherung durch den Zylinderschlüsselverriegelungsmechanismus, sondern gleichzeitig auch eine zusätzliche Verriegelung für den Fall, daß aus Gründen der Betriebssicherheit, wie noch laufende Maschine innerhalb eines Maschinenverkleidungskasten, oder noch unter Spannung stehende Schaltanlaqen innerhalb eines Schaltschrankes, der Zugang für eine Bedienungsperson blockiert werden muß.

Zusätzliche Sicherungseinrichtungen ermöglichen desweiteren, daß nur mit dem richtig konzipierten, beispielsweise mit den entsprechenden Profilierungen versehenen Sicherungsteil des Schwenkhebels bzw. des am Türrahmen befestigten Teils, und nur bei völlig verschlossener Tür und eingeschwenktem Schwenkhebel, nicht etwa auch schon mit einem Ersatzsicherungsteil, die Anlage wieder in Betrieb gesetzt werden kann. Sollte aus Wartungsgründen gleichwohl bei geöffneter Tür die Anlage in Betrieb gesetzt werden müssen, kann dies nur dadurch geschehen, daß ein entsprechend geformter schlüsselartiger Sicherungsteil, wie er auch am Schwenkhebel befestigt ist, in das andere Sicherungsteil eingesteckt wird, wobei durch die verschiedenen Zuhaltungen und Profilierungen ein sehr hoher Sicherungsgrad erreichbar ist, beispielsweise sind viele zehntausend Alternativen bei entsprechender Formung der Profile realsierbar, von denen nur eine wirksam wird.

Die vorliegende Anordnung hat auch den großen Vorteil, daß die Türzuhaltekraft nicht von der Sicherungseinrichtung aufgebracht werden muß, sondern von normalen, für diese Aufgabe speziell vorgesehenen Verschlußeinrichtungen des Türverschlusses, die mit der Sicherungseinrichtung selbst nicht identisch sind.

### GEWERBLICHE AUSWERTBARKEIT

Die Sicherheitseinrichtung gemäß der Erfindung ist in der Steuerungstechnik gewerblich auswertbar.

## Patentansprüche

1. Eine Sicherheitseinrichtung umfassender Schwenkhebelverschluß (14) für das Türblatt (12) eines Schaltschranks (24), die Klappe eines Gehäuses, die Wandverkleidung eines Gehäuserahmens, welcher Schwenkhebelverschluß (14) am Türblatt (12), an der Klappe, an der Wandverkleidung befestigbar ist und einen herausschwenkbaren Betätigungshebel (26) umfaßt,
wobei die Sicherheitseinrichtung ein erstes Teil (54, 154, 254) aufweist, das am Betätigungshebel (26) des am Türblatt. an der Klappe oder an der Wandverkleidung (12) befestigten Schwenkhebelverschlusses (14) befestigt ist,
sowie ein zweites Teil (44, 144, 244), das am Rahmen (24) der Tür, oder am Gehäuse bzw. am Gehäuserahmen befestigbar ist.
wobei die beiden Teile (54, 154, 254; 44, 144, 244) ineinandersteckbar sind und unter Steuerung eines elektrischen Signals, wie Existenz oder Nicht-Existenz eines Betriebssignals. in dieser Stellung gehalten werden,
wobei das am Rahmen (24) befestigte Teil (44, 144, 244), derart angeordnet ist, daß bei geschlossener Tür oder Klappe oder angebrachter Verkleidung (12) und eingeschwenktem Betätigungshebel (26) des Schwenkhebelverschlusses (14) das am Rahmen (24) befestigte Teil (44, 144, 244) in den Bereich des eingeschwenkten Betätigungshebels (26) ragt.

2. Schwenkhebelverschluß nach Anspruch 1, dadurch gekennzeichnet, daß das am Betätigungshebel (26) befestigte Teil (z.B. 254) ein Dauermagnet und das am Rahmen (24) befestigte Teil (244) ein Magnetschalter ist.

3. Schwenkhebelverschluß nach Anspruch 1, dadurch gekennzeichnet, daß das am Betätigungshebel (26) befestigte Teil (z.B. 154) einen Ansatz (60; 160) aufweist, der in dem anderen, am Rahmen (24) befestigten Teil (44; 144) mechanisch verriegelbar ist.

4. Schwenkhebelverschluß nach einem der Ansprüche 2 oder 3, dadurch gekennzeichnet, daß das eine, am Betätigungshebel (26) befestigte Teil (60; 160) ein Schlüsselprofil aufweist, das in eine ein entsprechendes Profil aufweisende Aufnahmeöffnung (52) im anderen, am Rahmen (24) befestigten Teil (44; 144) passend aufnehmbar ist.

5. Schwenkhebelverschluß nach einem der Ansprüche 3 oder 4, dadurch gekennzeichnet, daß das eine Teil einen Schlüsselbart umfaßt, in den Zuhaltungen des anderen Teils eingreifen können.

6. Schwenkhebelverschluß nach einem der Ansprüche 3 bis 5, dadurch gekennzeichnet, daß das eine Teil mit zumindest einer Öffnung oder Durchbruch versehen ist, in die zumindest ein von dem anderen Teil ausgehender Querstift oder Nase eindringen kann.

7. Schwenkhebelverschluß nach Anspruch 6, dadurch gekennzeichnet, daß die Öffnung oder der Durchbruch (62) ein unregelmäßiges Profil aufweist und daß die von dem anderen Teil ausgehende Querstift- oder Naseneinrichtung daran angepaßt ist.

8. Schwenkhebelverschluß nach einem der Ansprüche 3 bis 7, dadurch gekennzeichnet, daß das eine Teil (154) ein Querprofilierungen aufweisendes Flachmetallstück mit Einschnitten und/oder Durchbrüchen (62) regelmäßiger oder unregelmäßiger Form darstellt, welches an der Unterseite des Schwenkhebels fern von dessen Schwenkachse (27) angeordnet ist.

9. Schwenkhebelverschluß nach Anspruch 8, dadurch gekennzeichnet, daß das andere Teil ein Sicherheitsschalter (64) ist, der einen Aufnahmeschlitz für das Flachmetallstück aufweist, in welches mittels Steuersignal bewegliche oder Steuersignale erzeugende, den Aufnahmeschlitz durchdringende oder in diesen eindringende Stifte oder Nasen (66) aufweist.

10. Schwenkhebelverschluß nach einem der Ansprüche 1 bis 9, dadurch gekennzeichnet, daß der Schwenkhebelverschluß (14) eine Mulde (20) aufweist und daß das zweite Teil an einem bezüglich des Rahmens (24) festen Punkt derart angeordnet ist, daß bei geschlossener Tür (12), Klappe oder montierter Wandverkleidung und in die Mulde (20) eingeschwenktem Betätigungshebel (26) dieses zweite Teil durch eine Öffnung in der Mulde (20) hindurch bis zu dem zum Türblatt (12), Klappe oder Wandverkleidung weisendem Bereich des Betätigungshebels (26) reicht.

11. Schwenkhebelverschluß nach einem der Ansprüche 1 bis 10, dadurch gekennzeichnet, daß der zu sichernde Verschluß ein Stangenverschluß ist und zumindest eine der Stangen (18, 19) einen Vorsprung oder eine Verkröpfung (68) aufweist, die bei Bewegung in Öffnungsrichtung gegen eine Sperrvorsprung (66) fährt, der durch ein elektrisches Signal aus dem Bewegungsbereich des Vorsprungs oder der Verkröpfungsfläche (68) wegfahrbar ist.

12. Schwenkhebelverschluß nach einem der Ansprüche 1 bis 11, dadurch gekennzeichnet, daß der Betätigungshebel (26) eine zusätzliche, mechanisch durch einen Schlüssel lösbare Verriegelung (28) aufweist, die den Betätigungshebel (26) in seiner eingeschwenkten Stellung hält.

13. Schwenkhebelverschluß nach Anspruch 12, dadurch gekennzeichnet, daß die schlüsselbetätigbare mechanische Verriegelung (28) im Bereich der Betätigungshebelanlenkung (27) oder im Bereich des freien Endes des Betätigungshebels (26) angeordnet ist.

14. Verwendung des Schwenkhebelverschlußes nach einem der Ansprüche 1 bis 13 an einer in einem Türnahmen verschwenkbaren Tür, dadurch gekennzeichnet, daß das zweite Teil (44) auf der nach außen gewandten Fläche einer Rahmenabkantung (24) aufgesetzt ist und bei geschlossener Tür (12), Klappe oder montierte Wandverkleidung durch einen im Türblatt (12), Klappe oder Wandverkleidung angeordneten Durchbruch (33) hindurchreicht.

15. Verwendung des Schwenkhebelverschußes nach einem der Ansprüche 1 bis 13 an einer in einem Türanhmen verschwenkbaren Tür, dadurch gekennzeichnet, daß das zweite Teil (144) auf die zum Schrank- oder Gehäuseinneren weisende Fläche (46) einer Rahmenabkantung aufgesetzt ist und durch einen Durchbruch ( 50) in dieser Fläche und durch einen vom Türblatt (12), Klappe oder Wandverkleidung gebildeten Durchbruch (33) bei geschlossener Tür, Klappe oder montierter Wandverkleidung hindurchreicht.

16. Schwenkhebelverschluß nach einem der Ansprüche 1 bis 10, 12 und 13 bzw. dessen Verwendung nach einem der Ansprüche 14 und 15, dadurch gekennzeichnet, daß der zu sichernde Verschluß einen Schloßkasten (16) aufweist. in den ein durch ein elektrisches Signal axial verschieblicher Stift (66) derart einzudringen in der Lage ist, daß bei eingedrungenem Stift das Schloßkastenritzel oder durch den Schloßkasten hindurchreichende Stangen (18, 19) an einer Bewegung gehindert werden.

## Claims

1. Pivoted-lever locking device (14), comprising a safety device, for the door leaf (12) of a switchgear cabinet (24), the flap of a housing, the wall cladding of a housing frame, which pivoted-lever locking device (14) is adapted to be fixed to the door leaf (12), the flap, the wall cladding and comprises an actuating lever (26) which is adapted to be swung out,
the safety device including a first part (54, 154, 254), which is fixed to the actuating lever (26) of the pivoted-lever locking device (14) fixed to the door leaf, the flap or the wall cladding (12),
and a second part (44, 144, 244) which is adapted to be fixed to the frame (24) of the door, or to the housing or the housing frame,
the two parts (54, 154, 254; 44, 144, 244) being adapted to be inserted into one another and being held in this position under the control of an electrical signal, such as the existence or non-existence of an operating signal,
the part (44, 144, 244) fixed to the frame (24) being arranged such that with the door or flap or fitted cladding (12) closed and the actuating lever (26) of the pivoted-lever locking device (14) swung in, the part (44, 144, 244) fixed to the frame (24) projects into the region of the swung-in actuating lever (26).

2. Pivoted-lever locking device as claimed in Claim 1, characterised in that the part (e.g. 254) fixed to the actuating lever (26) is a permanent magnet, and the part (244) fixed to the frame (24) is a magnetic switch.

3. Pivoted-lever locking device as claimed in Claim 1, characterised in that the part (e.g. 154) that is fixed to the actuating lever (26) includes a lug (60; 160) which is adapted to be mechanically locked in the other part (44; 144), i.e. the part fixed to the frame (24).

4. Pivoted-lever locking device as claimed in one of Claims 2 or 3, characterised in that the one part (60; 160), the part fixed to the actuating lever (26), has a key profile which is adapted to be received by, and fit into, a receiving opening (52) having a corresponding profile in the other part (44; 144), i.e. the part fixed to the frame (24).

5. Pivoted-lever locking device as claimed in any one of Claims 3 or 4, characterised in that the one part comprises a key bit, into which tumblers of the other part can engage.

6. Pivoted-lever locking device as claimed in any one of Claims 3 to 5, characterised in that the one part is provided with at least one orifice or opening into which at least one cross-pin or lug proceeding from the other part can penetrate.

7. Pivoted-lever locking device as claimed in Claim 6, characterised in that the orifice or opening (62) has an irregular profile and that the cross-pin or lug device proceeding from the other part is adapted thereto.

8. Pivoted-lever locking device as claimed in any one of Claims 3 to 7, characterised in that the one part (154) is a flat piece of metal having transverse shaped elements and having regularly or irregularly shaped notches and/or openings (62), which is located on the underside of the pivoted lever some distance away from its pivoting axis (27).

9. Pivoted-lever locking device as claimed in Claim 8, characterised in that the other part is a safety switch (64) which has a receiving slit for the flat piece of metal, the latter having pins or lugs (66) which are movable by means of a control signal, generate control signals, pass through the receiving slit or penetrate into it.

10. Pivoted-lever locking device as claimed in any one of Claims 1 to 9, characterised in that the pivoted-lever locking device (14) includes a trough (20) and the second part is located at a fixed point in relation to the frame (24), such that with the door (12), flap or fitted wall cladding closed and the actuating lever (26) swung into the trough (20), this second part extends through an opening in the trough (20) up to the region of the actuating lever (26) which points to the door leaf (12), flap or wall cladding.

11. Pivoted-lever locking device as claimed in any one of Claims 1 to 10, characterised in that the locking device to be secured is a rod locking device and at least one of the rods (18, 19) has a projection or a right-angled bend (68) which, when moved in the direction of opening, encounters a blocking projection (66) which is adapted to be moved from the zone of movement of the projection or the face of the right-angled bend (68) by an electrical signal.

12. Pivoted-lever locking device as claimed in any one of Claims 1 to 11, characterised in that the actuating lever (26) includes an additional lock (28) which can be mechanically released by a key and which holds the actuating lever (26) in its swung-in position.

13. Pivoted-lever locking device as claimed in Claim 12, characterised in that the key-operable mechanical lock (28) is located in the region of the actuating lever hinge (27) or in the region of the free end of the actuating lever (26).

14. Use of the pivoted-lever locking device as claimed in any one of Claims 1 to 13 on a door which can turn in a door frame, characterised in that the second part (44) is placed on the outward face of a frame edge (24) and, with the door (12), flap or fitted wall cladding closed, passes through an opening (33) in the door leaf (12), flap or wall cladding.

15. Use of the pivoted-lever locking device as claimed in any one of Claims 1 to 13 on a door which can pivot in a door frame, characterised in that the second part (144) is mounted on that face (46) of a frame edge which points to the inside of the cabinet or housing and the said part passes through an opening (50) in this face and through an opening (33) formed by the door leaf (12), flap or wall cladding when the door, flap or fitted wall cladding is closed.

16. Pivoted-lever locking device as claimed in any one of Claims 1 to 10, 12 and 13 and its use as claimed in one of Claims 14 and 15, characterised in that the locking device to be secured includes a lock case (16), into which a pin (66) which is axially movable by an electrical signal is able to penetrate in such a way that with the pin inserted, the lock case pinion or rods (18, 19) passing through the lock case are prevented from moving.

## Revendications

1. Dispositif de fermeture à levier pivotant comprenant un dispositif de sécurité (14) pour le battant de porte (12) d'une armoire de commande (24), l'abattant d'un bâti, l'habillage de paroi d'un cadre de bâti, ledit dispositif de fermeture à levier pivotant (14) étant fixé sur le battant de porte (12), sur l'abattant, sur l'habillage de paroi et comportant un levier d'actionnement (26) pouvant être déplié, le dispositif de sécurité présentant une première partie (54, 154, 254) qui est fixée au levier d'actionnement (26) du dispositif de fermeture à levier pivotant (14) fixé au battant de porte, à l'abattant ou à l'habillage de paroi (12), ainsi qu'une deuxième partie (44, 144, 244) qui est fixée au cadre (24) de la porte ou au bâti ou au cadre du bâti, les deux parties (54, 154, 254 ; 44, 144, 244) pouvant être insérées l'une dans l'autre et étant maintenues dans cette position par la commande d'un signal électrique, comme l'existence ou la non-existence d'un signal de fonctionnement, la partie (44,144, 244) fixée au cadre (24) étant disposée de telle manière que lorsque la porte ou l'abattant est fermé ou lorsque l'habillage (12) est installé et lorsque le levier d'actionnement (26) du dispositif de fermeture à levier pivotant (14) est replié, la partie (44, 144, 244) fixée au cadre (24) s'étend dans la zone du levier d'actionnement (26) replié.

2. Dispositif de fermeture à levier pivotant selon la revendication 1, caractérisé en ce que la partie (par exemple 254) fixée sur le levier d'actionnement (26) est un aimant permanent et la partie (244) fixée sur le cadre (24) est un commutateur magnétique.

3. Dispositif de fermeture à levier pivotant selon la revendication 1, caractérisé en ce que la partie (par exemple 154) fixée sur le levier pivotant (26) présente une pièce ajoutée (60, 160) qui peut être verrouillée mécaniquement dans l'autre partie (44, 144) fixée au cadre (24).

4. Dispositif de fermeture à levier pivotant selon une quelconque des revendications 2 ou 3, caractérisé en ce qu'une partie (60, 160) fixée au levier d'actionnement (26) présente un profil en clé qui peut être repris de manière ajustée dans une ouverture de réception (52) présentant un profil correspondant dans l'autre partie (44, 144) fixée au cadre (24).

5. Dispositif de fermeture à levier pivotant selon une quelconque des revendications 3 ou 4, caractérisé en ce qu'une partie comprend un panneton dans lequel les gâchettes de l'autre partie peuvent s'agripper.

6. Dispositif de fermeture à levier pivotant selon une quelconque des revendications 3 à 5, caractérisé en ce qu'une partie est pourvue d'au moins une ouverture ou passage dans lequel peut pénétrer au moins une tige transversale ou un tenon partant de l'autre partie.

7. Dispositif de fermeture à levier pivotant selon la revendication 6, caractérisé en ce que l'ouverture ou le passage (62) présente un profil irrégulier et en ce que le dispositif à tige transversale ou à tenon partant de l'autre partie est adapté à ce profil.

8. Dispositif de fermeture à levier pivotant selon une quelconque des revendications 3 à 7, caractérisé en ce qu'une partie (154) représente une pièce de métal plat présentant des profils transversaux avec des découpes et/ou des passages (62) de forme régulière ou irrégulière, qui est disposée sur la face inférieure du levier pivotant, loin de son axe de pivotement (27).

9. Dispositif de fermeture à levier pivotant selon la revendication 8, caractérisé en ce que l'autre partie est un interrupteur de sécurité (64), qui présente une fente de réception pour la pièce de métal plat, dans lequel la fente de réception présente des tiges ou des butées (66) qui peuvent être déplacées à l'aide d'un signal de commande ou produisant un signal de commande et qui traversent ou pénètrent dans la fente de réception.

10. Dispositif de fermeture à levier pivotant selon une quelconque des revendications 1 à 9, caractérisé en ce que le dispositif de fermeture à levier pivotant (14) présente une cavité (20) et en ce que la deuxième partie est disposée sur un point fixe par rapport au cadre (24) de telle manière que lorsque la porte (12), l'abattant ou l'habillage installé de paroi est fermé et que le levier d'actionnement (26) est replié dans la cavité (20), cette deuxième partie s'étend à travers une ouverture dans la cavité (20) jusque dans la zone du levier d'actionnement (26) dirigé vers le battant de porte (12), l'abattant ou l'habillage de paroi.

11. Dispositif de fermeture à levier pivotant selon une quelconque des revendications 1 à 10, caractérisé en ce que le dispositif de fermeture à sécuriser est un dispositif de fermeture à tiges et en ce qu'au moins une des tiges (18, 19) présente une saillie ou un coude (68) qui bute, lors d'un mouvement dans le sens de l'ouverture, contre une butée de blocage (66) qui peut être écartée de la zone de mouvement de la saillie ou de la surface du coude (68) par un signal électrique.

12. Dispositif de fermeture à levier pivotant selon une quelconque des revendications 1 à 11, caractérisé en ce que le levier d'actionnement (26) présente un dispositif de verrouillage (28) supplémentaire, pouvant être déverrouillé mécaniquement par une clé, qui maintient le levier d'actionnement (26) dans sa position repliée.

13. Dispositif de fermeture à levier pivotant selon la revendication 12, caractérisé en ce que le dispositif de verrouillage (28) mécanique pouvant être actionné par une clé est disposé dans la zone de l'articulation (27) du levier d'actionnement ou dans la zone de l'extrémité libre du levier d'actionnement (26).

14. Utilisation du dispositif de fermeture à levier pivotant selon une quelconque des revendications 1 à 13, sur une porte pouvant être pivotée dans un cadre de porte, caractérisée en ce que la deuxième partie (44) est disposée sur la surface tournée vers l'extérieur d'une arête (24) du cadre et en ce que, lorsque la porte (12), l'abattant ou l'habillage installé de paroi est fermé, ladite deuxième partie passe à travers un passage (33) disposé dans le battant de porte (12), l'abattant ou l'habillage de paroi.

15. Utilisation du dispositif de fermeture à levier pivotant selon une quelconque des revendications 1 à 13, sur une porte pouvant être pivotée dans un cadre de porte, caractérisée en ce que la deuxième partie (44) est disposée sur la surface (46) d'une arête du cadre tournée vers l'intérieur de l'armoire ou du bâti et passe à travers une ouverture (50) dans cette surface et à travers une ouverture (33) formée par le battant de porte (12), l'abattant ou l'habillage lorsque la porte, l'abattant ou l'habillage installé est fermé.

16. Dispositif de fermeture à levier pivotant selon une quelconque des revendications 1 à 10, 12 et 13 ou son utilisation selon une quelconque des revendications 14 et 15, caractérisé en ce que le dispositif de fermeture à sécuriser présente un palastre (16) dans lequel une tige (66) pouvant être déplacée axialement par un signal électrique peut être introduite de telle manière qu'elle est en mesure d'empêcher le mouvement, lorsque la tige est introduite, du pignon du palastre ou des tiges (18, 19) passant dans le palastre.
